# FASCICULE DE BREVET EUROPEEN

(11) **EP 3 511 540 B1**
(45) Date de publication et mention de la délivrance du brevet: **07.10.2020**
(21) Numéro de dépôt: 18211494.2
(22) Date de dépôt: 11.12.2018
(51) Int. Cl.: F01N 3/20, F01N 9/00

(54) **PROCÉDÉ DE CONTRÔLE D'UN SYSTÈME DE RÉDUCTION SÉLECTIVE CATALYTIQUE**
STEUERUNGSVERFAHREN EINES SYSTEMS ZUR SELEKTIVEN KATALYTISCHEN REDUKTION
METHOD FOR CONTROLLING A SELECTIVE CATALYTIC REDUCTION SYSTEM

(30) Priorité: 12.01.2018 FR 1850242
(43) Date de publication de la demande: 17.07.2019
(73) Titulaire: PSA Automobiles SA, 78300 Poissy (FR)
(72) Inventeur: SUY, DARA, 92400 COURBEVOIE (FR); GENIES, JEAN FLORENT, 78100 ST GERMAIN EN LAYE (FR); BERNARD, YOAN, 78570 ANDRESY (FR)

(56) Documents cités:
- EP-A1- 2 025 388
- WO-A1-2015/048099
- US-A1- 2010 024 393
- US-A1- 2011 060 465
- US-A1- 2014 308 190
- US-A1- 2015 033 704

## Description

L'invention concerne, de façon générale, les systèmes de réduction sélective catalytique, en particulier montés au sein de véhicules automobiles.

L'invention porte plus particulièrement sur un procédé de contrôle d'un système de réduction sélective catalytique des gaz d'échappement d'un moteur thermique d'un véhicule automobile.

Aujourd'hui, un véhicule automobile à moteur thermique émet différents gaz, dits d'échappement, suite à la combustion de carburant et d'air dans le moteur thermique. L'émission de ces gaz d'échappement est réglementée par des normes visant à limiter la teneur en certains gaz, tels que l'oxyde d'azote, dans les gaz d'échappement, par post-traitement des gaz d'échappement.

Il est notamment connu de traiter les gaz d'échappement dans la ligne d'échappement des gaz, autrement dit après leur émission. Un tel traitement consiste en une réduction chimique de ces gaz d'échappement par ajout d'un agent réducteur, tel qu'une solution d'urée comprenant de l'ammoniac, en amont d'un catalyseur spécifique. La réaction chimique entre l'oxyde d'azote et l'ammoniac permet de former du diazote et de l'eau. Ce traitement est désigné SCR, pour Selective Catalytic Reduction en langue anglais.

Un tel système permet ainsi de décomposer les gaz polluants afin que ces derniers ne soient pas rejetés dans l'air extérieur. Cependant, l'ammoniac ayant une odeur désagréable, il est nécessaire d'en limiter la quantité rejetée en aval du catalyseur, autrement dit de limiter la quantité d'ammoniac n'ayant pas réagi avec de l'oxyde d'azote. Dans ce but, la quantité d'ammoniac injectée en amont du catalyseur est régulée selon la quantité d'oxyde d'azote générée par le moteur.

On connaît notamment par le document US20100024397A1, un système de contrôle de la réduction de l'oxyde d'azote par de l'ammoniac. Un tel système comprend un capteur d'ammoniac adapté pour mesurer la quantité d'ammoniac sortant du catalyseur afin d'ajuster la quantité d'ammoniac injectée. Cependant, une telle solution présente des inconvénients. En effet, un tel système nécessite d'ajouter un capteur d'ammoniac ce qui augmente le nombre d'éléments nécessaires et augmente la complexité et le coût d'un tel système.

On connaît encore les documents WO2015/048099A1 ou EP2025388A1 correspondant au préambule de la revendication 1.

L'invention vise donc à résoudre ces inconvénients en proposant un système permettant de contrôler de manière aisée et peu coûteuse un système de réduction sélective catalytique.

Pour parvenir à ce résultat, la présente invention concerne un procédé de contrôle d'un système de réduction sélective catalytique permettant un traitement d'oxydes d'azote présents dans les gaz d'échappement s'écoulant dans une ligne d'échappement d'un véhicule automobile, le système comprenant un catalyseur dans lequel est injecté un agent réducteur adapté pour réagir avec des oxydes d'azote émis en amont du catalyseur par un moteur à combustion interne du véhicule, ledit procédé comprenant une étape de modélisation du débit total dudit agent réducteur en aval du catalyseur à partir d'au moins un paramètre représentatif du fonctionnement du système de réduction sélective catalytique, caractérisé en ce qu'il comprend :
- une étape de détermination du débit de désorption de l'agent réducteur en aval du catalyseur à partir de la masse d'agent réducteur stockée dans le catalyseur et de la capacité maximale de stockage du catalyseur,
- une étape de détermination du débit de saturation de l'agent réducteur en aval du catalyseur à partir du débit d'agent réducteur traversant le catalyseur,
- le débit total de l'agent réducteur en aval du catalyseur étant modélisé en additionnant le débit de désorption et le débit de saturation.

Les termes « amont » et « aval » sont décrits par rapport aux gaz d'échappement d'écoulant dans la ligne d'échappement d'amont en aval depuis le moteur à combustion interne. On entend par les termes « modélisation du débit », la détermination indirecte du débit en aval du catalyseur. Autrement dit, sans mesure d'un tel débit.

Grâce au procédé selon l'invention, il est possible de déterminer le débit d'agent réducteur en aval du catalyseur à partir d'une modélisation. Ainsi, aucun élément supplémentaire, tel qu'un capteur, n'est nécessaire, ce qui limite les coûts. De plus, la modélisation du débit en complément d'une mesure directe ou indirecte (permettant de détecter une défaillance du système de réduction sélective catalytique) permet d'éviter une détection erronée. La détermination du débit total à partir du débit de désorption et du débit de saturation permet de modéliser plus précisément le débit total. En effet, une telle modélisation prend en compte tout l'agent réducteur sortant du catalyseur et non seulement une partie, notamment le débit de désorption, comme dans l'art antérieur. Enfin, la détermination de ces débits à partir de la vitesse volumique horaire d'écoulement des gaz d'échappement dans la ligne d'échappement augmente encore la précision de la modélisation. Ceci permet d'optimiser les stratégies d'injection d'agent réducteur et le contrôle du traitement des oxydes d'azote.

Avantageusement, le paramètre représentatif est la vitesse volumique horaire d'écoulement des gaz d'échappement dans la ligne d'échappement.

Avantageusement, le débit traversant est avantageusement déterminé à partir de la capacité de saturation du catalyseur et du débit d'agent réducteur en amont du catalyseur.

Avantageusement, l'agent réducteur comprend de l'ammoniac.

Avantageusement, les débits sont déterminés à partir de la température mesurée à l'intérieur du catalyseur, de la vitesse volumique horaire d'écoulement des gaz d'échappement dans la ligne d'échappement et de cartographies reliant la température et la vitesse volumique horaire à un débit.

Avantageusement, les cartographies comprennent en outre un facteur de vieillissement du système de réduction sélective catalytique.

L'invention concerne également un véhicule automobile comprenant un moteur à combustion interne et un système de réduction sélective catalytique comprenant un catalyseur de réduction sélective d'oxydes d'azote émis par ledit moteur à combustion interne, ledit système comprenant un calculateur configuré pour modéliser le débit total de l'agent réducteur en aval du catalyseur selon le procédé décrit précédemment.

D'autres caractéristiques et avantages de l'invention apparaîtront à la lecture de la description détaillée des modes de réalisation de l'invention, donnés à titre d'exemple uniquement, et en référence au dessin qui montre :

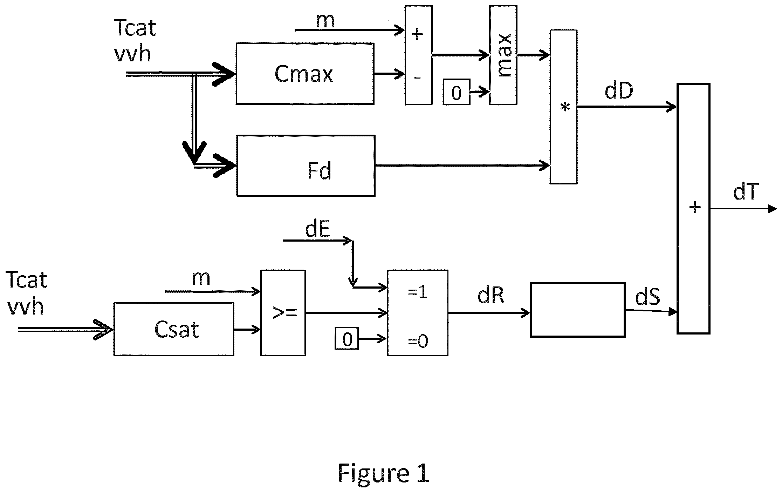

- la figure 1, un schéma d'une forme de mise en œuvre du procédé de contrôle selon l'invention.

Dans ce qui va suivre, les modes de réalisation décrits s'attachent plus particulièrement à une mise en œuvre du procédé selon l'invention au sein d'un véhicule automobile. Cependant, toute mise en œuvre dans un contexte différent, en particulier dans tout type de véhicule, est également visée par la présente invention.

Un véhicule automobile comprend un moteur thermique et une ligne d'échappement des gaz émis par ledit moteur thermique.

Le moteur thermique comprend une chambre de combustion dans laquelle du carburant et du comburant sont mélangés. Le carburant peut, par exemple, être du diesel, et être injecté dans la chambre de combustion par un injecteur. Le comburant peut, par exemple, être de l'air.

La combustion du mélange dans la chambre de combustion entraîne le piston en translation, ce qui permet de transformer l'énergie thermique de la combustion en énergie mécanique afin d'entraîner l'arbre du moteur en rotation.

Lors de la combustion du mélange, des gaz d'échappement sont formés. De tels gaz d'échappement comprennent notamment des gaz, tels que, par exemple, de l'oxyde d'azote, dont la teneur dans les gaz d'échappement est réglementée par des normes. On notera que l'oxyde d'azote peut être noté NOₓ, notamment NO dans le cas du monoxyde d'azote ou NO₂ dans le cas du dioxyde d'azote.

Les gaz d'échappement sont alors évacués par la ligne d'échappement permettant également de post-traiter au moins partiellement ces gaz d'échappement.

Pour ce faire, la ligne d'échappement comprend un système de réduction sélective catalytique.

Dans la suite de la description, les termes « amont » et « aval » font référence aux gaz d'échappement s'écoulant d'amont en aval depuis le moteur thermique vers la ligne d'échappement.

Le système de réduction sélective catalytique, également désigné SCR, pour Selective Catalytic Reduction en langue anglais, permet de réduire l'oxyde d'azote NOₓ.

Un tel système comprend un catalyseur de réduction sélective dans lequel l'oxyde d'azote est réduit.

Afin de permettre la réduction de l'oxyde d'azote NOₓ dans le catalyseur de réduction sélective, un agent réducteur est injecté en amont de ce dernier afin de mélanger les gaz d'échappement à cet agent réducteur.

L'agent réducteur peut être de l'ammoniac NH₃ qui est un agent réducteur des oxydes d'azotes NOₓ.

Le catalyseur est également adapté pour stocker le surplus d'agent réducteur. Autrement dit, l'ammoniac n'ayant pas réagi avec de l'oxyde d'azote peut être stocké dans le catalyseur afin de réagir ultérieurement avec de l'oxyde d'azote entrant dans ce catalyseur tout en évitant que de l'ammoniac sorte de la ligne d'échappement.

Le catalyseur peut ainsi stocker une certaine quantité d'ammoniac et présente donc une capacité maximale Cmax de stockage d'ammoniac correspond à la quantité d'ammoniac qu'il peut stocker. Lorsque la quantité d'ammoniac stockée dans le catalyseur dépasse cette capacité maximale Cmax de stockage, de l'ammoniac qui était stocké dans le catalyseur peut en sortir. On parle alors de désorption de l'ammoniac par le catalyseur.

Le catalyseur présente en outre une capacité de saturation Csat, supérieure à la capacité maximale Cmax de stockage. Lorsque la quantité d'ammoniac stockée dans le catalyseur dépasse cette capacité de saturation Csat, l'ammoniac entrant dans le catalyseur en ressort. Autrement dit, au-delà de cette capacité de saturation Csat, l'ammoniac traverse le catalyseur.

Le système de réduction sélective catalytique selon l'invention comprend en outre un calculateur et au moins un capteur adapté pour mesurer au moins un paramètre représentatif du fonctionnement du système de réduction sélective catalytique.

Dans une forme de réalisation préférée, le système de réduction sélective catalytique comprend un capteur de température et un capteur de vitesse volumique horaire. De manière alternative, la température et/ou la vitesse volumique horaire peuvent être estimées.

Le capteur de température est adapté pour mesurer la température Tcat à l'intérieur du catalyseur. Le capteur de vitesse volumique horaire est adapté pour mesurer la vitesse volumique horaire vvh des gaz d'échappement s'écoulant dans la ligne d'échappement.

Le calculateur permet de déterminer le débit total dT de l'agent réducteur en aval du catalyseur. Un tel calculateur peut notamment être le calculateur de contrôle moteur, également désigné ECU pour Engine Control Unit en langue anglaise.

Le calculateur est configuré pour déterminer le débit de désorption dD et le débit de saturation dS d'agent réducteur en aval du catalyseur.

Tout d'abord, le calculateur est configuré pour déterminer la masse m d'agent réducteur stocké dans le catalyseur. De manière connue, le calculateur peut notamment déterminer la masse m stockée à partir de la température Tcat mesurée dans le catalyseur et de la proportion des oxydes d'azote dans les gaz d'échappement. De manière alternative, le calculateur peut également déterminer la masse m stockée à partir de la vitesse de stockage, dans le catalyseur, d'agent réducteur injecté dans la ligne d'échappement. La détermination de la masse m stockée étant connue, elle ne sera pas décrite plus en détail.

Comme illustré sur la figure 1, le calculateur est alors configuré pour déterminer le débit de désorption dS. Dans ce but, le calculateur est également configuré pour déterminer la capacité maximale Cmax de stockage d'agent réducteur du catalyseur. Le calculateur peut notamment déterminer la capacité maximale Cmax de stockage à partir de la température Tcat mesurée dans le catalyseur et la vitesse volumique horaire vvh des gaz d'échappement.

Le calculateur est configuré pour comparer la masse m stockée d'agent réducteur dans le catalyseur à la capacité maximale Cmax de stockage et ainsi déterminer le débit de désorption dD d'agent réducteur, autrement dit le débit d'agent réducteur s'écoulant en aval du catalyseur. En effet, tant que la masse m stockée est inférieure à la capacité maximale Cmax de stockage, l'agent réducteur entrant dans le catalyseur peut y être stocké. Lorsque la masse m stockée est supérieure ou égale à la capacité maximale Cmax de stockage, de l'agent réducteur stocké dans le catalyseur peut être déstocké du catalyseur et sortir du catalyseur.

En outre, le calculateur est configuré pour déterminer un facteur de désorption Fd modélisant l'effet transitoire lorsque la masse m stockée atteint la capacité maximale Cmax de stockage. Ceci permet de modéliser le retardement de la désorption d'agent réducteur en excès dans le catalyseur. Le calculateur détermine le facteur de désorption Fd à partir de la température Tcat mesurée dans le catalyseur et la vitesse volumique horaire vvh des gaz d'échappement.

Le calculateur est alors configuré pour déterminer le débit de désorption dD à partir de la masse m stockée d'agent réducteur dans le catalyseur, de la capacité maximale Cmax de stockage et du facteur de désorption Fd comme illustré sur la figure 1.

Avantageusement, le calculateur détermine la capacité maximale Cmax de stockage et le facteur de désorption Fd à partir de cartographies, autrement dit des tables de valeur associant les valeurs de différents paramètres en eux, ce qui permet de limiter les ressources nécessaires à de telles déterminations et rend ces déterminations aisées. Ces cartographies peuvent également prendre en compte le vieillissement du système de réduction sélective catalytique. Dans ce but, un facteur de vieillissement est intégré aux cartographies. L'utilisation de telles cartographies étant connue, elle ne sera pas décrite plus en détail.

Parallèlement au calcul de débit de désorption dD, le calculateur est configuré pour déterminer le débit de saturation dS comme illustré sur la figure 1.

Dans ce but, le calculateur est configuré pour déterminer la capacité de saturation Csat du catalyseur. Le calculateur peut déterminer la capacité de saturation Csat à partir de la température Tcat mesurée dans le catalyseur et la vitesse volumique horaire vvh des gaz d'échappement. De préférence, cette détermination est réalisée à partir de cartographies qui peuvent également comprendre un facteur de vieillissement comme cela a été décrit précédemment.

Le calculateur est configuré pour comparer la masse m stockée d'agent réducteur dans le catalyseur à la capacité de saturation Csat et ainsi déterminer si le catalyseur est saturé. Lorsque la masse m stockée est supérieure ou égale à la capacité de saturation Csat, le calculateur est configuré pour déterminer le débit traversant dR d'agent réducteur dans le catalyseur à partir du débit entrant dE d'agent réducteur en amont du catalyseur. le débit traversant dR correspond ainsi au débit d'agent réducteur traversant le catalyseur.

Le calculateur est alors configuré pour déterminer le débit de saturation dS à partir du débit traversant dR. Dans ce but, la quantité d'agent réducteur sortant du catalyseur est mesurée pendant une période de temps T, également désigné période d'intégration. Cette quantité mesurée est séparée en deux parties à partir d'un facteur prédéterminé désigné « ratio ».

Le calculateur est alors configuré pour déterminer le débit de saturation dS durant l'intervalle de temps T à partir d'une partie de la quantité mesurée d'agent réducteur sortant du catalyseur proportionnelle au ratio. L'autre partie (proportionnelle à 1-ratio) de la quantité mesurée d'agent réducteur sortant du catalyseur sera ajoutée à la quantité mesurée d'agent réducteur sortant du catalyseur durant la période de temps suivante T+1.

Le débit de saturation dS est ainsi déterminé pour plusieurs périodes de temps successives jusqu'à ce qu'il soit inférieur à un seuil prédéterminé, de préférence proche de zéro.

Le calculateur est enfin configuré pour déterminer le débit total dT d'agent réducteur en aval du catalyseur. Dans ce but, le calculateur est configuré pour additionner le débit de désorption dD et le débit de saturation dS afin d'obtenir le débit total dT.

## Revendications

1. Procédé de contrôle d'un système de réduction sélective catalytique permettant un traitement d'oxydes d'azote présents dans les gaz d'échappement s'écoulant dans une ligne d'échappement d'un véhicule automobile, le système comprenant un catalyseur dans lequel est injecté un agent réducteur adapté pour réagir avec des oxydes d'azote émis en amont du catalyseur par un moteur à combustion interne du véhicule, ledit procédé comprenant une étape de modélisation du débit total (dT) dudit agent réducteur en aval du catalyseur à partir d'au moins un paramètre (Tcat, vvh) représentatif du fonctionnement du système de réduction sélective catalytique, **caractérisé en ce qu'**il comprend :
- une étape de détermination du débit de désorption (dD) de l'agent réducteur en aval du catalyseur à partir de la masse (m) d'agent réducteur stockée dans le catalyseur et de la capacité maximale (Cmax) de stockage du catalyseur,
- une étape de détermination du débit de saturation (dS) de l'agent réducteur en aval du catalyseur à partir du débit (dR) d'agent réducteur traversant le catalyseur,
- le débit total (dT) de l'agent réducteur en aval du catalyseur étant modélisé en additionnant le débit de désorption (dD) et le débit de saturation (dS).

2. Procédé selon la revendication 1, dans lequel le paramètre représentatif est la vitesse volumique horaire (vvh) d'écoulement des gaz d'échappement dans la ligne d'échappement.

3. Procédé selon la revendication 1 ou 2, dans lequel le débit traversant (dR) est déterminé à partir de la capacité de saturation (Csat) du catalyseur et du débit (dE) d'agent réducteur en amont du catalyseur.

4. Procédé selon l'une des revendications précédentes, dans lequel l'agent réducteur comprend de l'ammoniac.

5. Procédé selon l'une des revendications précédentes, dans lequel les débits (dS, dD) sont déterminés à partir de la température (Tcat) mesurée à l'intérieur du catalyseur, de la vitesse volumique horaire (vvh) d'écoulement des gaz d'échappement dans la ligne d'échappement et de cartographies reliant la température (Tcat) et la vitesse volumique horaire (vvh) à un débit (dS, dD).

6. Procédé selon la revendication précédente, dans lequel les cartographies comprennent en outre un facteur de vieillissement du système de réduction sélective catalytique.

7. Véhicule automobile comprenant un moteur à combustion interne et un système de réduction sélective catalytique comprenant un catalyseur de réduction sélective d'oxydes d'azote émis par ledit moteur à combustion interne, ledit système comprenant un calculateur configuré pour modéliser le débit total (dT) de l'agent réducteur en aval du catalyseur selon le procédé selon l'une des revendications précédentes.

## Patentansprüche

1. Verfahren zur Steuerung eines selektiven katalytischen Reduktionssystems, das eine Behandlung von Stickoxiden ermöglicht, die in den Abgasen vorhanden sind, die in einer Abgasleitung eines Kraftfahrzeugs strömen, wobei das System einen Katalysator umfasst dem ein Reduktionsmittel injiziert wird, das zur Reaktion mit Stickoxiden geeignet ist, die stromaufwärts des Katalysators von einem Verbrennungsmotor des Fahrzeugs emittiert werden, wobei das Verfahren einen Schritt zum Modellieren der Gesamtströmungsrate (dT) des Reduktionsmittels stromabwärts des Katalysators umfasst aus mindestens einem Parameter (Tcat, vvh), der für den Betrieb des selektiven katalytischen Reduktionssystems repräsentativ ist und **dadurch gekennzeichnet ist, dass** es umfasst:
- ein Schritt zum Bestimmen der Desorptionsrate (dD) des Reduktionsmittels stromabwärts des Katalysators aus der Masse (m) des im Katalysator gespeicherten Reduktionsmittels und der maximalen Speicherkapazität (Cmax) des Katalysators;
- einen Schritt zum Bestimmen der Sättigungsflussrate (dS) des Reduktionsmittels stromabwärts des Katalysators aus der Flussrate (dR) des Reduktionsmittels, das durch den Katalysator läuft,
- die Gesamtflussrate (dT) des Reduktionsmittels nach dem zu modellierenden Katalysator durch Addition der Desorptionsflussrate (dD) und der Sättigungsflussrate (dS).

2. Verfahren nach Anspruch 1, wobei der repräsentative Parameter die stündliche Volumengeschwindigkeit (vvh) des Flusses der Abgase in der Abgasleitung ist.

3. Verfahren nach Anspruch 1 oder 2, wobei die Durchflussrate (dR) aus der Sättigungskapazität (Csat) des Katalysators und der Flussrate (dE) des Reduktionsmittels vor dem Katalysator bestimmt wird.

4. Verfahren nach einem der vorhergehenden Ansprüche, wobei das Reduktionsmittel Ammoniak umfasst.

5. Verfahren nach einem der vorhergehenden Ansprüche, wobei die Fließgeschwindigkeiten (dS, dD) aus der im Katalysator gemessenen Temperatur (Tcat) aus der stündlichen Volumengeschwindigkeit (vvh) des Fließens des Katalysators bestimmt werden Abgase in der Abgasleitung und Karten, die die Temperatur (Tcat) und die stündliche Volumengeschwindigkeit (vvh) mit einer Durchflussrate (dS, dD) verbinden.

6. Verfahren nach dem vorhergehenden Anspruch, bei dem die Karten ferner einen Alterungsfaktor des selektiven katalytischen Reduktionssystems umfassen.

7. Kraftfahrzeug, umfassend einen Verbrennungsmotor und ein selektives katalytisches Reduktionssystem, umfassend einen Katalysator für die selektive Reduktion von Stickoxiden, die von dem Verbrennungsmotor emittiert werden, wobei das System einen Computer umfasst, der konfiguriert ist, um den Gesamtstrom (dT) zu modellieren Reduktionsmittel stromabwärts des Katalysators gemäß dem Verfahren gemäß einem der vorhergehenden Ansprüche.

## Claims

1. Method of controlling a selective catalytic reduction system allowing a treatment of nitrogen oxides present in the exhaust gases flowing in an exhaust line of a motor vehicle, the system comprising a catalyst in which is injected a reducing agent suitable for reacting with nitrogen oxides emitted upstream of the catalyst by an internal combustion engine of the vehicle, said method comprising a step of modeling the total flow rate (dT) of said reducing agent downstream of the catalyst to from at least one parameter (Tcat, vvh) representative of the operation of the selective catalytic reduction system, **characterized in that** it comprises:
- a step of determining the desorption rate (dD) of the reducing agent downstream of the catalyst from the mass (m) of reducing agent stored in the catalyst and the maximum storage capacity (Cmax) of the catalyst,
- a step of determining the saturation flow rate (dS) of the reducing agent downstream of the catalyst from the flow rate (dR) of reducing agent passing through the catalyst,
- the total flow rate (dT) of the reducing agent downstream of the catalyst being modeled by adding the desorption flow rate (dD) and the saturation flow rate (dS).

2. Method of claim 1, wherein the representative parameter is the hourly volume velocity (vvh) of flow of the exhaust gases in the exhaust line.

3. Method of claim 1 or 2, wherein the through flow rate (dR) is determined from the saturation capacity (Csat) of the catalyst and the flow rate (dE) of reducing agent upstream of the catalyst.

4. Method according to one of the preceding claims, wherein the reducing agent comprises ammonia.

5. Method according to one of the preceding claims, wherein the flow rates (dS, dD) are determined from the temperature (Tcat) measured inside the catalyst, from the hourly volume speed (vvh) of flow of the exhaust gases in the exhaust line and maps linking the temperature (Tcat) and the hourly volume speed (vvh) to a flow rate (dS, dD).

6. Method according to the preceding claim, in which the maps further comprise an aging factor of the selective catalytic reduction system.

7. Motor vehicle comprising an internal combustion engine and a selective catalytic reduction system comprising a catalyst for the selective reduction of nitrogen oxides emitted by said internal combustion engine, said system comprising a computer configured to model the total flow rate (dT) reducing agent downstream of the catalyst according to the process according to one of the preceding claims.
